(19) Europäisches Patentamt
European Patent Office
Office européen des brevets

(11) **EP 2 112 505 B1**

(12) **EUROPÄISCHE PATENTSCHRIFT**

(45) Veröffentlichungstag und Bekanntmachung des Hinweises auf die Patenterteilung:
**03.08.2011  Patentblatt 2011/31**

(51) Int Cl.:
***G01N 23/20*** *(2006.01)*    ***G01N 23/207*** *(2006.01)*

(21) Anmeldenummer: **09156775.0**

(22) Anmeldetag: **30.03.2009**

(54) **Röntgendiffraktometer zum mechanisch korrelierten Verfahren von Quelle, Detektor und Probenposition**

X-ray diffraction meter for mechanically correlated processing of source, detector and sample positioning

Diffractomètre à rayons X destiné au procédé de corrélation mécanique de la source, du détecteur et de la position d'échantillon

(84) Benannte Vertragsstaaten:
**DE GB NL**

(30) Priorität: **22.04.2008  DE 102008020108**

(43) Veröffentlichungstag der Anmeldung:
**28.10.2009  Patentblatt 2009/44**

(73) Patentinhaber: **Bruker AXS GmbH**
**76187 Karlsruhe (DE)**

(72) Erfinder:
• **Dr. Mettendorf, Kai Uwe**
**76133, Karlsruhe (DE)**

• **Bolzinger, Claus**
**76137, Karlsruhe (DE)**
• **Dr. Lange, Joachim**
**76767, Hagenbach (DE)**

(74) Vertreter: **Kohler Schmid Möbus**
**Patentanwälte**
**Ruppmannstraße 27**
**70565 Stuttgart (DE)**

(56) Entgegenhaltungen:
**EP-A- 1 681 561    WO-A-2005/015187**
**JP-A- 6 066 741    JP-A- 6 313 757**
**US-A- 4 446 568**

**Beschreibung**

Hintergrund der Erfindung

Die Erfindung betrifft ein Diffraktometer, mit einer Quelle zur Erzeugung von Röntgenstrahlung, mit einer Probenposition zur Anordnung einer Probe, und mit einem Detektor zur Registrierung von von der Probe ausgehender Röntgenstrahlung, wobei die Quelle und der Detektor bezüglich einer Achse A, die durch die Probenposition verläuft, rotierbar sind, und wobei die Quelle, die Probenposition und der Detektor in einer gemeinsamen Ebene M, die senkrecht zur Achse A liegt, angeordnet sind.

Ein solches Diffraktometer ist beispielsweise bekannt geworden durch die JP6066741.

Röntgendiffraktometrie wird in vielfältiger Weise eingesetzt, um kristalline (und mit gewissen Einschränkungen auch amorphe) Bestandteile von Proben zu analysieren. Dabei wird Röntgenstrahlung an Kristallebenen in der Probe gebeugt. Aus der räumlichen Intensitätsverteilung der gebeugten Röntgenstrahlung, insbesondere der Lage von Intensitätsmaxima ("Reflexe") kann beispielsweise auf Netzebenenabstände und damit auf das Kristallgitter (Gittersymmetrie) oder auch auf bevorzugte Netzebenenorientierungen (Texturen) geschlossen werden. Den grundlegenden Zusammenhang zwischen Netzebenenabstand, Einfallswinkel und Wellenlänge von Röntgenstrahlung beschreibt das Bragg'sche Gesetz.

Bei der Durchführung von Röntgenbeugungsexperimenten bildet die Normale der betrachteten Netzebenenschar die Winkelhalbierende von einfallendem und ausfallendem Röntgenstrahl. Eine Gesamt-Röntgenmessung zur Bestimmung eines Röntgendatensatzes besteht aus vielen Einzelmessungen von Integralintensitäten bei unterschiedlichen Strahlgeometrien. Während einer Gesamt-Röntgenmessung, die viele integrale Einzelmessungen umfasst, werden entsprechend die Röntgenquelle und/oder der Röntgendetektor verfahren und/oder die Probe verkippt.

Für einige Messverfahren, insbesondere wenn die Probe während einer Röntgenmessung nicht verkippt werden soll, ist es notwendig, für die Gesamt-Röntgenmessung (Messung eines Datensatzes) sowohl Quelle als auch Detektor jeweils auf Kreisbögen um die Probe zu verfahren.

Ein Röntgendiffraktometer mit einer auf einem ersten Kreisbogen verfahrbaren Quelle und einem auf einem zweiten Kreisbogen verfahrbarem Detektor ist aus der JP6066741 bekannt. Im Stand der Technik werden Quelle und Detektor üblicherweise jeweils mit einem eigenen Motor angetrieben, und die Bewegungen werden durch elektronische Steuerungen der beiden Motoren gemäß den Anforderungen des Messverfahrens, in der Regel in einer $\vartheta$-$\vartheta$-Geometrie oder $\vartheta$-$2\vartheta$-Geometrie, synchronisiert. Es ist auch bekannt, über zwei separate Getriebe mit nur einem Motor sowohl Quelle als auch Detektor zu verfahren.

In beiden Fällen wird der Diffraktometeraufbau recht aufwändig und damit teuer.

Aufgabe der Erfindung

Der Erfindung liegt die Aufgabe zugrunde, ein Diffraktometer mit stark vereinfachtem Aufbau vorzustellen, bei dem Quelle und Detektor auf Kreisbögen gemäß einer $\vartheta$-$\vartheta$-Geometrie verfahrbar sind.

Kurze Beschreibung der Erfindung

Diese Aufgabe wird gelöst durch ein Diffraktometer der eingangs genannten Art, das dadurch gekennzeichnet ist,

- dass ein erstes Gestänge vorgesehen ist, welches um die Achse A drehbar gelagert ist, und an welchem die Quelle befestigt ist,
- dass ein zweites Gestänge vorgesehen ist, welches ebenfalls um die Achse A drehbar gelagert ist, und an welchem der Detektor befestigt ist,
- dass das erste Gestänge weiterhin an einem ersten Hilfsdrehpunkt HD1 drehbar um eine erste Hilfsachse HA1 gelagert ist, wobei die erste Hilfsachse HA1 parallel zur Achse A verläuft und zu dieser einen festen Abstand AB hat,
- dass das zweite Gestänge an einem zweiten Hilfsdrehpunkt HD2 drehbar um eine zweite Hilfsachse HA2 gelagert ist, wobei die zweite Hilfsachse HA2 ebenfalls parallel zur Achse A verläuft und zu dieser ebenfalls den festen Abstand AB hat,
- dass eine Führung vorgesehen ist, entlang welcher einer oder beide der Hilfsdrehpunkte HD1, HD2 verfahrbar sind, wobei die Führung spiegelsymmetrisch bezüglich einer Ebene E verläuft, die die Achse A enthält und die von den beiden Hilfsdrehpunkten HD1, HD2 gleich weit entfernt ist,
- wobei die Probenposition relativ zur Führung in einer x-Richtung verfahrbar ist, wobei die x-Richtung in der Ebene E und senkrecht zur Achse A verläuft.

Das erfindungsgemäße Diffraktometer weist einen im Wesentlichen dreieckigen Grundaufbau auf. An den Spitzen dieses Dreiecks liegen Rotationszentren, nämlich die beiden Hilfsdrehpunkte HD1 und HD2 sowie ein Hauptdrehpunkt HDP am Ort der Achse A. Die beiden Gestänge ("Schenkel") verbinden den Hauptdrehpunkt HDP mit den Hilfsdrehpunkten bei jeweils festem und gleichem Abstand AB. Die Führung korreliert die beiden Hilfsdrehpunkte HD1, HD2 bezüglich der Symmetrieebene E. Die beiden Gestänge werden beim Verfahren der Probenposition (relativ zur Führung) ähnlich einer Schere auf- und zugeklappt.

Im einfachsten Fall sind beide Hilfsdrehpunkte auf der Führung verfahrbar. Wird dann die Probenposition - und damit der Hauptdrehpunkt HDP - relativ zur Führung entlang der Ebene E verfahren, so erzwingen die Gestänge ein relatives Nachführen der Hilfsdrehpunkte HD1, HD2 entlang der Führung. Da die Führung symmetrisch bezüglich der Ebene E verläuft, und die Abstände AB fest und identisch sind, verändern sich dabei die Lagen, insbesondere die Abstände der Hilfsdrehpunkte HD1 und HD2 relativ zu der Ebene E stets in gleicher Weise. Dadurch wird sichergestellt, dass die beiden Gestänge stets mit betragsgleichem, aber entgegengesetzt gerichtetem Winkel um den Hauptdrehpunkt HDP bzw. die Achse A verschwenken. Da die Quelle und der Detektor auf den Gestängen angeordnet sind, kann damit bezüglich der Probenposition am Hauptdrehpunkt HDP stets eine $\vartheta$-$\vartheta$-Bedingung für die Röntgenstrahlung eingehalten werden.

Die Relativbewegung von Probenposition und Führung ("x-Bewegung"), durch welche eine Gesamt-Röntgenmessung in einem $\vartheta$-Bereich von ca. 0°-80° in einer Bragg-Brentano-Messgeometrie durchlaufen werden kann, kann mit einem einzigen, einfachen Translationsmotor angesteuert werden. Dabei kann insbesondere die Probenposition entlang einer ortsfesten Schiene, die in der Ebene E verläuft, bei ortsfester Führung motorisch verfahren werden. Es können auch die Hilfsdrehpunkte auf einer ortsfesten Führung motorisch verfahren werden (etwa mit einer Gewindestange), und die Probenposition gleitet dann beispielsweise entlang einer Schiene mit. Es ist ebenfalls möglich, die Probenposition ortsfest zu halten, und die Führung in x-Richtung motorisch zu verfahren, wobei die Hilfsdrehpunkte zusätzlich auf der Führung gleiten können. Bei ortsfester Probenposition kann auch ein motorisches Verfahren der Hilfsdrehpunkte auf der Führung vorgesehen sein, wobei die Führung in x-Richtung gleiten kann, etwa in einer ortsfesten Schiene. In allen Fällen ist das Durchlaufen eines gewünschten $\vartheta$-Bereichs sehr einfach; die $\vartheta$-$\vartheta$-Bedingung bleibt durch die Diffraktometermechanik von selbst stets eingehalten.

Bei ortsfester Probenposition wird die Führung in x-Richtung bewegt, und bei ortsfester Führung wird die Probenposition in x-Richtung bewegt (Die absolute Bewegung von Probenposition und Führung ist für einen Winkelscan nicht wichtig). Eine ortsfeste Führung, auf der beide Hilfsdrehpunkte (angetrieben oder unangetrieben) verfahren werden können, gestattet in der Regel den einfachsten Aufbau des erfindungsgemäßen Diffraktometers. Ist nur ein Hilfsdrehpunkt bezüglich der Führung verfahrbar, so kann die Probenposition (zusätzlich zur x-Bewegung) entsprechend der Führungsrichtung der Führung verfahren werden, um einen Freiheitsgrad bereitzustellen; in diesem Fall sollte die Führung am einfachsten gerade verlaufen. Man beachte, dass am Ort der (mathematischen) Achse A typischerweise ein Achs-Maschinenbauteil ausgebildet ist, an dem die Gestänge gelagert sind.

Beim erfindungsgemäßen Diffraktometer können also mit nur einem Antrieb die Verschwenkung der Röntgenquelle, des Röntgendetektor und die (relative) Positionierung der Probe ausgeführt werden. Insbesondere sind keine teuren Zahnkränze in Getrieben zur Koordinierung oder Auswahl der verschiedenen Bewegungen notwendig. Da das erfindungsgemäße Diffraktometer mit nur einem Antrieb (bevorzugt und typischerweise einem Linearantrieb) und ohne komplexe Getriebemechanik auskommt, wird eine deutliche Kosteneinsparung erzielt. Das erfindungsgemäße Diffraktometer kann daher insbesondere als kostengünstiges Tischgerät ("Tabletop"-Gerät) ausgebildet sein. Mit dem erfindungsgemäßen Diffraktometer können Röntgenmessungen in Bragg-Brentano-Messgeometrie ausgeführt werden.

Bevorzugte Ausführungsformen der Erfindung

Bei einer bevorzugten Ausführungsform des erfindungsgemäßen Diffraktometers ist der Abstand QP zwischen Quelle und Probenposition gleich dem Abstand PD zwischen Probenposition und Detektor. Die Detektorposition wird dabei typischerweise durch die Position der Detektorblende definiert. In Bragg-Brentano-Geometrie wird die von der Quelle emittierte divergente Röntgenstrahlung von der ebenen Probe auf den Detektor näherungsweise zurückfokussiert. Die ebene Probe liegt dabei tangential an den Fokussierungskreis an, der durch die Punkte Quellenposition, Detektorblendenposition und Hauptdrehpunkt HDP an Probenposition gegeben ist.

Bei einer vorteilhaften Ausführungsform verläuft die Führung gerade. Dies ist einfach zu realisieren, insbesondere in Hinblick auf die Führung der verfahrbaren Hilfsdrehpunkte.

Bei einer bevorzugten Ausführungsform ist vorgesehen, dass beide Hilfsdrehpunkte HD1, HD2 auf der Führung gegenläufig verfahrbar sind. Dieser Aufbau ist besonders einfach zu realisieren, beispielsweise mit zwei Schlitten auf einer durchgehenden Schiene oder zwei Schlitten auf zwei separaten (und typischerweise koaxialen) Schienenabschnitten. Sonst notwendige, mechanisch aufwändig zu realisierende Translationsfreiheitsgrade von Führung oder Probenposition können dann eingespart werden.

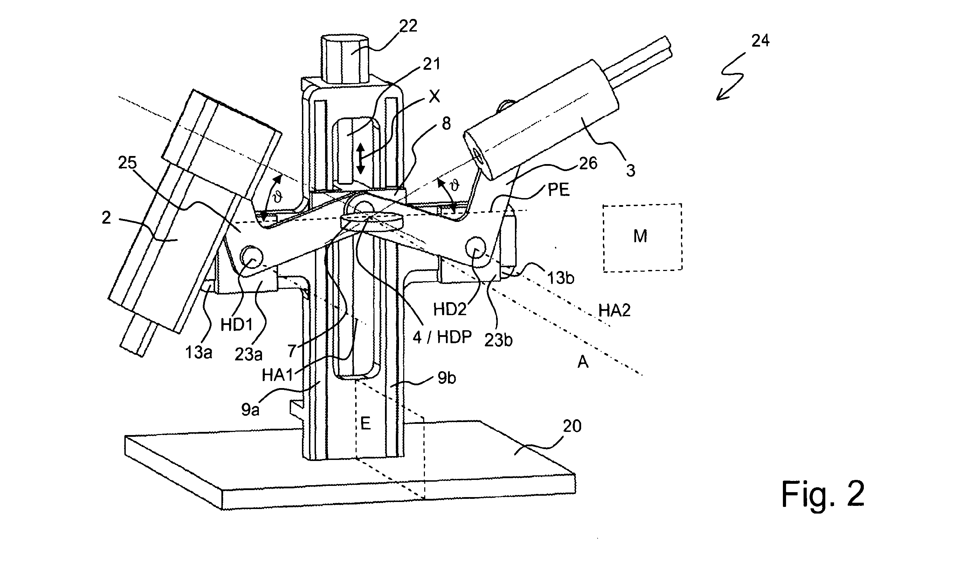

Bevorzugt ist auch eine Ausführungsform, bei der die Gestänge jeweils so ausgebildet sind, dass Probenposition, zugehöriger Hilfsdrehpunkt HD1, HD2 und Quelle bzw. Detektor jeweils ein Dreieck, insbesondere ein gleichschenkliges Dreieck, in der Ebene M ausbilden. Mit dieser Ausführungsform wird eine günstige (wenig zum Verkanten neigende) Kraftverteilung in den Gestängen und in den Lagern (etwa der Probenposition und der Hilfsdrehpunkte) über weiten $\vartheta$-Winkelbereich erreicht. Der jeweilige Hilfsdrehpunkt bildet den Scheitelpunkt am jeweiligen Gestänge; die Gestänge können insbesondere V-förmig ausgebildet sein. Bewährt hat sich insbesondere eine nach oben offene V-Form, vgl. Fig. 2.

Besonders bevorzugt ist eine Ausführungsform, bei der ein motorischer Antrieb vorgesehen ist, mit dem die Probenposition relativ zur Führung verfahrbar ist. Der motorische Antrieb kann an der Probenposition und/oder einem oder beiden Hilfsdrehpunkten und/oder an der Führung ansetzen. Der Antrieb verfügt bevorzugt über eine elektronische Steuerung für eine genaue Kontrolle der Relativposition von Probenposition und Führung als Funktion der Zeit, so dass eine Abfolge von integralen Einzelmessungen einer Gesamt-Röntgenmessung gut automatisiert werden kann.

Bei einer vorteilhaften Weiterbildung dieser Ausführungsform ist vorgesehen, dass die Führung ortsfest verläuft, und die Probenposition mittels des motorischen Antriebs entlang einer ortsfesten Schiene verfahrbar ist. Dies vereinfacht wiederum den Aufbau des Diffraktometers. Die Probenposition ist typischerweise definiert über einen Probenhalter (oder eine Probenaufnahme), der verfahren wird. Die Führung wird im Allgemeinen nicht verfahren (nicht translatiert). Ortsfest meint hierbei, dass sich im Rahmen des Winkelscans einer Gesamt-Röntgenmessung der Ort nicht ändert (wobei eine etwaige überlagerte Bewegung des Diffraktometers als ganzes außer Betracht bleibt).

Bei einer anderen, bevorzugten Weiterbildung umfasst die Führung eine Gewindestange, welche mit dem motorischen Antrieb angetrieben ist. Mindestens ein Hilfsdrehpunkt, und bevorzugt beide Hilfsdrehpunkte, sitzen auf der Gewindestange eingreifend auf und werden über deren Rotation linear auf dieser verfahren. Dadurch kann eine motortypische Drehbewegung sehr einfach in eine Translation, hier des oder der Hilfsdrehpunkte, umgesetzt werden.

Bei einer besonders bevorzugten Weiterbildung ist eine Steuereinrichtung für den motorischen Antrieb vorgesehen, welche einen Vorschub der Probenposition in x-Richtung gemäß einer vorgegebenen, zeitlichen Funktion x(t) erzeugt, insbesondere so dass der Detektor gleiche Winkelinkremente in gleichen Zeiten überstreicht. Die Steuereinrichtung ermöglicht einen automatisierten Messbetrieb, und dabei insbesondere die definierte Positionierung von Quelle und Detektor als Funktion der Zeit t. Wenn der Detektor gleiche Winkelinkremente in gleichen Zeiten überstreichen soll, so wird x(t) in nicht-linearer Weise so gewählt, dass d/dt $\vartheta$(t)=const ist. Man beachte, dass x(t) dabei kontinuierlich oder in diskreten Schritten geändert werden kann. Die Bestimmung der Steuerungs-Funktion x(t) erfolgt dabei aus dem sich aus der Diffraktometergeometrie ergebenden Zusammenhang $\vartheta$(x), mit x: Position der Probenposition relativ zur Führung, und $\vartheta$: Einfallswinkel der Röntgenstrahlung, mittels d/dt [$\vartheta$ (x)] = d$\vartheta$/dx * dx/dt = const.. Falls die Beziehung d/dt $\vartheta$(t)=const. gilt, so kann aus über jeweils gleiche Zeiten $\Delta$t integrierten, bei verschiedenen Winkelpositionen gemessenen Intensitäten unmittelbar ein Intensitätsprofil I($\vartheta$) ("Diffraktogramm") erstellt werden. Man beachte, dass die x-Position der Probenposition grundsätzlich relativ zur Führung zu verstehen ist.

Bevorzugt ist ebenfalls eine andere Weiterbildung, die dadurch gekennzeichnet ist, dass eine Steuereinrichtung für den motorischen Antrieb vorgesehen ist, welche einen Vorschub der Probenposition in x-Richtung gemäß einer vorgegebenen, zeitlichen Funktion x(t) erzeugt mit d/dt x(t)=const., und dass eine Auswerteeinrichtung vorgesehen ist, welche einen nicht-linearen Zusammenhang $\vartheta$ (x) bei der Bestimmung eines Intensitätsprofils I($\vartheta$) von der Probe berücksichtigt. Die Auswerteeinrichtung kann dazu nötigenfalls den Detektor steuern, etwa den zeitlichen Takt (d.h. veränderliche Integrationszeit $\Delta$t) der Einzelmessungen. Im Allgemeinen ist die Steuerung des motorischen Antriebs mit einer konstanten Geschwindigkeit von x (bzw. einem linearen Zusammenhang von x und t) mechanisch und steuerungstechnisch einfach zu realisieren (insbesondere sehr viel einfacher und kostengünstiger als ein nicht-linearer Zusammenhang von x und t). Eine an dann nicht-konstantes d/dt $\vartheta$(t) angepasste Auswertung über Software ist ohne nennenswerte Kosten realisierbar. Detailinformationen zu möglichen Arbeitsweisen der Auswerteeinrichtung werden weiter unten gegeben. Man beachte wiederum, dass die x-Position der Probenposition grundsätzlich relativ zur Führung zu verstehen ist.

Eine Weiterentwicklung dazu sieht vor, dass die Steuereinrichtung eine in einem Zeitintervall $t_i$ bestimmte Intensität $I(t_i)$ durch Multiplikation mit einem Faktor $\left. \dfrac{d\vartheta}{dx} \right|_{xi}$ korrigiert,

mit i: Index der integralen Einzelmessungen und $x_i$: mittlerer x-Wert bei Einzelmessung i.

Bei einer besonders bevorzugten Ausführungsform des erfindungsgemäßen Diffraktometers ist der Detektor als 1-dimensionaler Detektor mit einem länglichen Detektorfenster ausgebildet ist, wobei das Detektorfenster über seine gesamte Länge in der Ebene M liegt. Beim eindimensionalen Detektor sind mehrere Detektorelemente am Detektor hintereinander aufgereiht, alle Detektorelemente liegen dabei in der (Mess-)Ebene M. Mit dem eindimensionalen Detektor kann die Gesamtzahl der gleichzeitig registrierten Röntgenimpulse deutlich gesteigert werden, wodurch das Signal-zu-RauschVerhältnis verbessert wird. Besonderheiten für die Messungsauswertung beim 1-dimensionalen Detektor werden weiter unten erläutert. Der 1-dimensionale Detektor ist eine Alternative zum 0-dimensionalen Detektor, der im einfachsten Fall mit der Erfindung verwendet wird.

Besonders bevorzugt ist auch eine Ausführungsform, bei der das Diffraktometer so ausgebildet ist, dass eine an der Probenposition angeordnete Probe während einer Relativbewegung von Probenposition und Führung ihre Ausrichtung beibehält, insbesondere wobei die an der Probenposition angeordnete Probe horizontal oder senkrecht ausgerichtet ist.. Mit dieser Ausführungsform sind (in der horizontalen Ausrichtung) auch verkippungsempfindliche Proben, insbesondere flüssige Proben, besonders gut handhabbar. Im einfachsten Fall ist der Probenhalter bzw. Probenposition fix (keine Translation, keine Verkippung), oder die Probenposition bzw. der Probenhalter wird bei der Relativbewegung ausschließlich verfahren (Translation, aber keine Verkippung). In der Praxis wird meist letzteres eingerichtet, wobei der Probenhalter mit der Probe bzw. die Probenposition ausschließlich vertikal verfahren wird. Eine Probe kann aber während einer Einzel- oder Gesamtmessung um eine vertikale Achse rotiert werden, etwa zu Mittelungszwecken. Die senkrechte (vertikale) Probenausrichtung kann insbesondere bei Messungen in Transmissionsgeometrie gut genutzt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig. 1      eine erste Ausführungsform eines erfindungsgemäßen Diffraktometers in so genannter "V-Geometrie" in schematischer Seitenansicht;

Fig. 2      eine zweite Ausführungsform eines erfindungsgemäßen Diffraktometers in so genannter "Y-Geometrie" in schematischer Schrägansicht;

Fig. 3      eine dritte Ausführungsform eines erfindungsgemäßen Diffraktometers in "V-Geometrie" mit einem 1-dimensionalen Detektor;

Fig. 4      eine Motorsteuereinheit mit Detektorauswertung für ein erfindungsgemäßes Diffraktometer in Schemadarstellung;

Fig. 5a      eine schematische Darstellung der geometrischen Verhältnisse an einem erfindungsgemäßen Diffraktometer ähnlich Fig. 2 bei $\vartheta = 0°$;

Fig. 5b      eine schematische Darstellung der geometrischen Verhältnisse an einem erfindungsgemäßen Diffraktometer ähnlich Fig. 2 bei $\vartheta > 0°$;

Fig. 6      eine Illustration eines Messintervalls für eine Röntgen- Einzelmessung mit einem erfindungsgemäßen Diffraktometer.

*I. Erfindungsgemäße Diffraktometer*

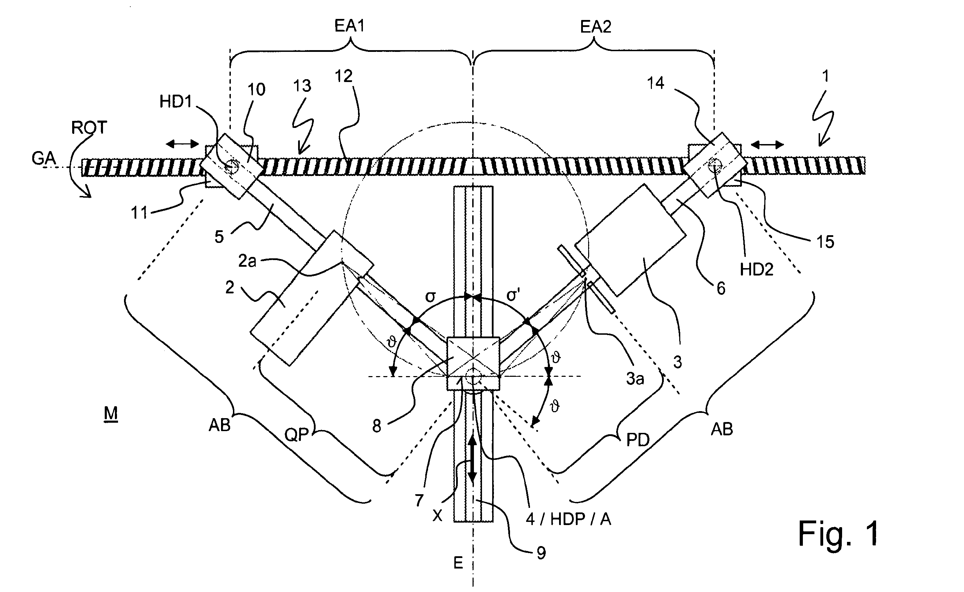

Die **Figur 1** zeigt eine erste Ausführungsform eines erfindungsgemäßen Diffraktometers 1, mit einer Quelle 2 für Röntgenstrahlung, hier eine Röntgenröhre, einem Detektor 3, hier einem 0-dimensionalen Detektor mit nur einem Registrierungselement für Röntgenstrahlung, und einer Probenposition 4 zur Anordnung einer Probe (hier ausgebildet mit einem ebenen Probenhalter 7; Mitte des Probenhalters 7 ist die Probenposition 4 zugeordnet). Der Probenhalter 7 ist auf einem Schlitten 8 angeordnet, der in einer vertikalen, ortsfesten Schiene 9 frei gleiten kann.

Die Quelle 2 ist auf einem ersten Gestänge 5 fest montiert, welches um eine Achse A (die senkrecht zur Zeichenebene verläuft) drehbar gelagert ist. Die Achse A verläuft dabei durch die Probenposition 4. Der Detektor 3 ist auf einem zweiten Gestänge 6 fest montiert, welches ebenfalls um die Achse A drehbar gelagert ist. Dem Schnittpunkt der Gestänge am Ort der Achse A wird dabei ein gemeinsamer Hauptdrehpunkt HDP der beiden Gestänge 5, 6 zugeordnet. Wird der Schlitten 8 entlang der Schiene 9 vertikal bewegt, so bewegen sich die Probenposition und der Hauptdrehpunkt HDP mit.

Das erste Gestänge 5 endet an seinem der Probenposition 4 abgewandten Ende in einem Abschlussstück 10, welches drehbar an einem Gegenstück 11 einer geraden Gewindestange 12 gelagert ist, vgl. den zugehörigen ersten Hilfsdrehpunkt HD1. Das Gegenstück 11 weist ein Innengewinde auf, welches in das Außengewinde der Gewindestange 12 eingreift. Bei Rotation der Gewindestange (vgl. Pfeil ROT) um die Gewindestangenachse GA bewegt sich das Gegenstück 11 entlang der Gewindestange 12 in horizontaler Richtung. In so fern wirkt die Gewindestange 12 als eine Führung 13: Bei Bewegung des Gegenstücks 11 entlang der Gewindestangenachse GA verfahren der erste Hilfsdrehpunkt HD1 und damit auch das Abschlussstück mit.

Am zweiten Gestänge 6 ist analog ein weiteres Endstück 14 ausgebildet, welches um den zweiten Hilfsdrehpunkt HD2 drehbar auf einem weiteren Gegenstück 15 der Gewindestange 12 gelagert ist. Man beachte, dass in der Mitte der Gewindestange 12 der Drehsinn des Außengewindes wechselt, so dass die Bewegungen von Gegenstück 11 und weiterem Gegenstück 15 bei Rotation der Gewindestange 12 gegengleich sind.

Man beachte, dass die jeweiligen Drehachsen von Hauptdrehpunkt HDP, erstem Hilfsdrehpunkt HD1 und zweitem Hilfsdrehpunkt HD2 parallel ausgerichtet sind.

Die Gewindestange 12 ist in nicht näher dargestellter Weise über einen Motor antreibbar. Die Gewindestange 12 wird in der vorgestellten Ausführungsform in nicht näher dargestellten Lagern ortsfest (aber dabei rotierbar für die Rotation ROT) gehalten.

Die Gestänge 5, 6 und die Führung 13 (also die Gewindestange 12) sind spiegelsymmetrisch bezüglich einer Ebene E ausgebildet: Der Hauptdrehpunkt HDP liegt auf der Ebene E. Die Abstände EA1 und EA2 von erstem Hilfsdrehpunkt HD1 und zweitem Hilfsdrehpunkt HD2 zur Ebene E sind betragsgleich. Ebenfalls betragsgleich sind der Winkel σ, unter dem die Quelle 2 die Probenposition (hier gemessen gegen die Ebene E) mit Röntgenstrahlung beleuchtet, und der Winkel σ', unter dem der Detektor die Probenposition 4 (hier gemessen wiederum gegen die Ebene E) Röntgenstrahlung registriert. Die Verlaufsrichtung der Führung 13 ist zu beiden Seiten der Ebene E spiegelgleich (Man beachte, dass außerhalb des Verfahrbereichs der Gegenstücke 11, 15 eine Symmetrie jedoch nicht notwendig ist).

Weiterhin sind die Abstände AB des ersten Hilfsdrehpunkts HD1 zum Hauptdrehpunkt HDP und des zweiten Hilfsdrehpunkts HD2 zum Hauptdrehpunkt HDP gleich (und fest, nämlich durch die Länge der Gestänge 5, 6 vorgegeben). Ebenfalls sind der Abstand QP zwischen Quelle 2 und Probenposition 4 (der Ort der Quelle 2 wird dabei abbildungstechnisch verstanden, vorliegend der Ort der Röntgenanode 2a) und der Abstand PD zwischen Probenposition 4 und Detektor 3 (auch der Ort des Detektors wird dabei abbildungstechnisch verstanden, vorliegend der Ort einer Detektorblende 3a) fest, nämlich durch die jeweiligen Montagepositionen auf den Gestängen 5, 6 vorgegeben. Bevorzugt sind die Abstände QP und PD betragsgleich; in diesem Fall wird eine Strahldivergenz der Röntgenstrahlung bei Reflektion an der Probe an der Probenposition 4 zurückfokussiert. Man beachte, dass sich Probenposition 4, abbildungstechnischer Quellenort (hier Röntgenanode 2a) und abbildungstechnischer Detektorort (hier Detektorblende 3a) in einer gemeinsamen Ebene M (hier der Zeichenebene befinden).

Bei Rotation ROT der Gewindestange 12 in eine erste Drehrichtung verfahren die beiden Gegenstücke 11, 15 auf der Führung 13 nach innen, d.h. auf die Ebene E zu. Dabei gilt stets EA1=EA2, obwohl die Beträge von EA1 und EA2 abnehmen. Da die beiden Abstände AB fest bleiben, wird dabei der Schlitten 8 - und damit die Probenposition 4 - auf der Schiene 9 nach unten geschoben. Die Verfahrrichtung der Probenposition 4 auf der Schiene 9 relativ zur Führung 13 ist in Fig. 1 als x-Richtung gekennzeichnet (die x-Richtung verläuft senkrecht zur Verbindungslinie der beiden Hilfsdrehpunkte HD1, HD2 und senkrecht zur Achse A). Beim Verfahren verkleinern sich die Winkel σ und σ', wobei aber stets weiter gilt σ=σ'. Der Probenhalter 7 bleibt dabei stets waagerecht.

Bei Rotation der Gewindestange 12 in die andere Richtung schieben sich die Gegenstücke 11, 15 nach außen, und die Probenposition 4 verfährt nach oben.

Aufgrund der Lage der x-Richtung in der Symmetrieebene E, der festen und gleichen Abstände AB und der Spiegelsymmetrie der Führung 13 bezüglich der Ebene E bleibt bei jedem Relativ-Verfahren der Probenposition 4 in x-Richtung die Winkelsymmetrie σ=σ' erhalten. Dabei kommt es nicht darauf an, ob der motorische Antrieb an den Hilfsdrehpunkten HD1, HD2 (bzw. den Gegenstücke 11, 15) angreift oder an der Probenposition 4 (bzw. dem Schlitten 9). Die Ergänzungswinkel zu 90° von σ und σ' sind die Einfalls- und Ausfallswinkel ϑ der Röntgenstrahlung, die ebenfalls betragsgleich bleiben. So bleibt in allen Verfahrpositionen eine ϑ-ϑ-Geometrie erhalten. Dies wird erfindungsgemäß durch die Goniometer-Mechanik der Gestänge 5, 6, der Führung 13, des Hauptdrehpunkts HDP und der Hilfsdrehpunkte HD1, HD2 erreicht. In der gezeigten Ausführungsform bleibt die Ebene E ortsfest.

Man beachte, dass für die Goniometer-Mechanik nach Figur 1 eines der Gegenstücke 11, 15 auch als auf der Führung 13 frei gleitender Schlitten ausgebildet sein kann. Ein angetriebenes (in die Gewindestange 12 eingreifendes) Gegenstück reicht aus, um die relative Bewegung der Probenposition 4 in x-Richtung zu erzwingen. Diese Bewegung wirkt sich dann über das zugehörige Gestänge auch auf den auf der Führung frei gleitenden Schlitten aus.

Aufgrund der V-artigen Form der Gestänge 5, 6 wird die Geometrie des Diffraktometeraufbaus von Fig. 1 auch mit "V-Goniometer" bezeichnet.

Man beachte weiterhin, dass in einem aufwändigeren, erfindungsgemäßen Diffraktometeraufbau auch einer der Hilfsdrehpunkte ortsfest (und nicht entlang der Führung 13 verfahrbar) eingerichtet werden kann. In diesem Fall muss der Hauptdrehpunkt HDP (bzw. die Probenposition 4) nicht nur senkrecht zur Führung 13, sondern auch mit einer Komponente parallel zur Führung 13 verfahrbar sein (die Probenposition 4 muss sich nämlich mittels des zugehörigen Gestänges um den ortsfesten Hilfsdrehpunkt drehen können). Dies bedeutet, dass sich bei der Relativbewegung von Probenposition und Führung auch die Ebene E absolut verschiebt, nämlich in horizontaler Richtung. Die **Figur 2** zeigt eine weitere Ausführungsform eines erfindungsgemäßen Diffraktometers 24. Dieses umfasst ein Grundgestell 20, in welchem eine vertikale Gewindestange 21 drehbar gelagert ist. Die Gewindestange 21 ist über einen Motor 22 antreibbar. Am Grundgestell 20 sind weiterhin zwei ortsfeste Schienen 9a, 9b ausgebildet, in denen ein Schlitten 8 verfahrbar ist. Der Schlitten 8 ist gleichzeitig Gegenstück zur Gewindestange 21 und somit durch den Motor 22 entlang der Schienen 9a, 9b in einer x-Richtung verfahrbar.

Am Grundgestell 20 ist weiterhin durch horizontale Schienen eine ortsfeste, zweiteilige Führung 13a, 13b ausgebildet. An jedem Teilabschnitt 13a, 13b der Führung ist ein frei verschiebbarer Schlitten 23a, 23b angeordnet. An den Schlitten 23a, 23b ist jeweils ein Hilfsdrehpunkt HD1, HD2 ausgebildet, um den ein zugehöriges Gestänge 25, 26 drehbar bezüglich einer Hilfsachse HA1, HA2 gelagert ist. Erstes Gestänge 25 und zweites Gestänge 26 sind dabei näherungsweise V-förmig ausgebildet. Die Teilabschnitte 13a, 13b der Führung verlaufen hier gerade in horizontaler Richtung und untereinander koaxial.

Beide Gestänge 25, 26 sind weiterhin an einem Hauptdrehpunkt HDP drehbar gelagert, der am Schlitten 8 ausgebildet ist. Durch den Hauptdrehpunkt HDP verläuft horizontal die zugehörige (Dreh-)Achse A. Die Drehachse A verläuft weiterhin durch eine Probenposition 4, die durch einen ebenen Probenhalter 7 (bzw. dessen Mitte) definiert ist. Der Probenhalter 7 ist am Schlitten 8 befestigt und mit diesem verfahrbar.

Am äußeren Ende des ersten Gestänges 25 ist eine Quelle 2 für Röntgenstrahlung befestigt. Diese richtet einen Röntgenstrahl mit einem Einfallswinkel $\vartheta$ auf die Probenposition 4. Am äußeren Ende des zweiten Gestänges 26 ist ein Detektor 3 befestigt. Dieser registriert Röntgenstrahlung, die von der Probenposition 4 unter einem Ausfallswinkel von ebenfalls 9 ausgeht (Einfallswinkel und Ausfallswinkel werden gegen die hier horizontale Probenebene PE gemessen, die durch den Probenhalter 7 definiert wird).

Die beiden Hilfsdrehpunkte HD1, HD2 sind zueinander spiegelsymmetrisch bezüglich einer Ebene E, welche vertikal ausgerichtet ist und welche die Achse A enthält (Die Ebene E "teilt" somit das Diffraktometer 24 in der Mitte).

Die Probenposition 4 ist entlang der x-Richtung in der Ebene E mittels des Motors 22 und der Gewindestange 21 verfahrbar. Das Verfahren der Probenposition 4 bzw. des Schlittens 8 in den Schienen 9a, 9b bewirkt eine Drehung der Gestänge 25, 26 um die jeweiligen Hilfsdrehpunkte HD1, HD2 und weiterhin ein Verfahren der Hilfsdrehpunkte HD1, HD2 (bzw. der Schlitten 23a, 23b) auf der zweiteiligen Führung 13a, 13b. Dabei kommt es zu einem gleichzeitigen, koordinierten Verfahren der Positionen von Quelle 2 und Detektor 3; letzteres geht mit einer identischen Veränderung von Einfalls- und Ausfallswinkel $\vartheta$ an der Probenposition 4 einher. Mit nur einem Motor 22 (einem Translationsmotor für den Schlitten 8) kann somit ein ausgedehnter $\vartheta$-Winkelbereich für eine Gesamt-Röntgenmessung durchfahren werden.

Aufgrund der Y-ähnlichen Gestalt des Grundgestells 20, insbesondere der zweiteiligen Führung 13a, 13b und der Schienen 9a, 9b, wird die Geometrie des Diffraktometeraufbaus von Fig. 2 auch mit "Y-Goniometer" bezeichnet.

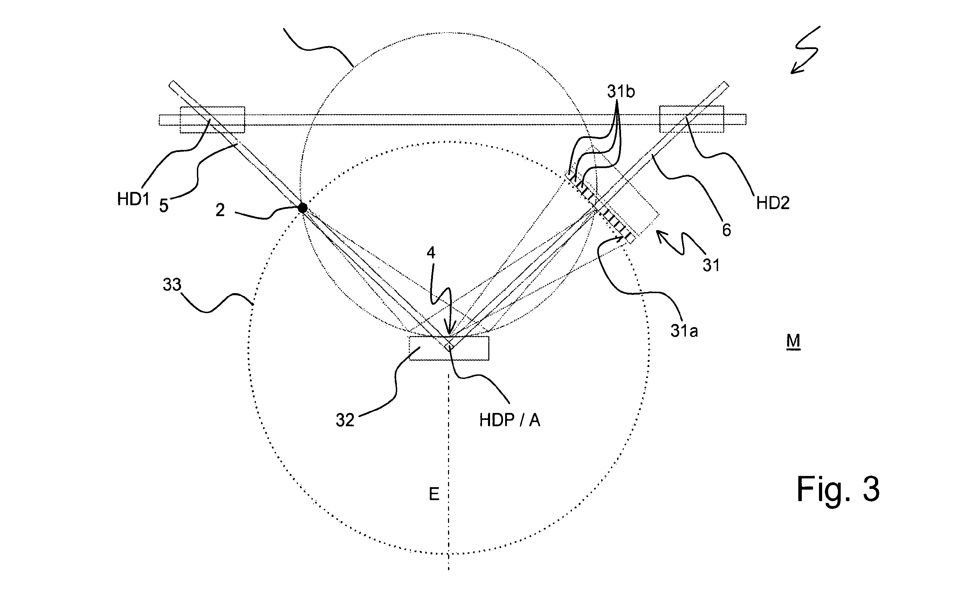

Die **Figur 3** zeigt schematisch den Aufbau einer Ausführungsform eines erfindungsgemäßen Röntgendiffraktometers 30, ähnlich der Ausführungsform von Fig. 1, mit einem 1-dimensionalen Detektor 31.

Um den Hauptdrehpunkt HDP bzw. die Achse A sind die Gestänge 5, 6 drehbar gelagert. Auf dem ersten Gestänge ist die Quelle 2 angeordnet, so dass diese auf einem Kreisbogen 33 um den Hauptdrehpunkt HDP verfahren werden kann. Auf dem zweiten Gestänge 6 ist der Detektor 31 mit gleichem Abstand zum Hauptdrehpunkt HDP angeordnet, so dass dieser ebenfalls auf dem Kreisbogen 33 um den Hauptdrehpunkt verfahren werden kann. Kreisbogen 33 wird als Messkreis bezeichnet.

Zusätzlich eingezeichnet ist hier ein Fokussierungskreis 34, der durch die Quelle 2, die Probenposition 4 (bzw. Probenhalter 32) und die Mitte eines Detektorfensters 31 a des Detektor 31 beschrieben wird. Das Detektorfenster 31 a weist eine Vielzahl von Detektorelementen 31 b auf, die über die Länge des Detektorfensters 31 a gerade aufgereiht sind (man beachte, dass die Länge des länglichen Detektorfensters 31 a in Fig. 3 übertrieben dargestellt ist). Das Detektorfenster 31 a liegt in diesem Fall tangential am Kreisbogen 33 an.

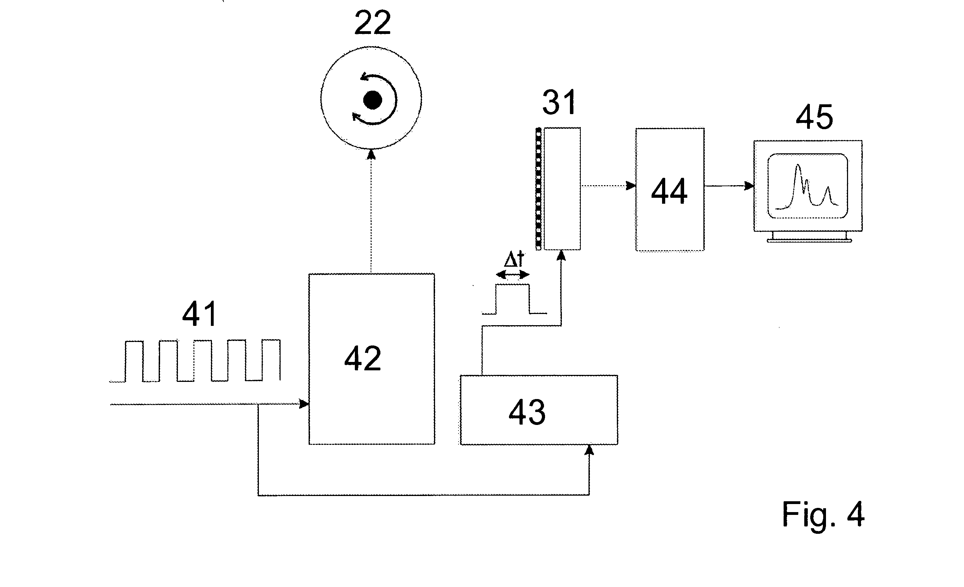

Die **Figur 4** illustriert die Anbindung eines erfindungsgemäßen Diffraktometers, insbesondere des Diffraktometers von Fig. 3, an eine elektronische Motorsteuerung und Detektorauswertung.

Ein periodisches Kontrollsignal 41 wird in eine Steuereinrichtung 42 für den motorischen Antrieb (Motor) und eine Detektorsteuerung 43 eingegeben. Die Steuereinrichtung 42 treibt den Motor 22 an (der Motor 22 kann beispielsweise an eine Gewindestange angekoppelt sein), wobei typischerweise ein bestimmter Verlauf x(t) (x: Position der Probenposition relativ zur Führung; t: Zeit) eingehalten wird.

Die Detektorsteuerung 43 leitet aus dem Kontrollsignal 41 (typischerweise in Abstimmung mit der Motorsteuerung 42) eine Ansteuerung des Detektors 31 ab. Dabei können insbesondere die Integrationszeiten $\Delta t$ der Kanäle des Detektors 31 als Funktion der x-Position der Probenposition vorgegeben werden. Die vom Detektor 31 registrierten Signale werden von einer Auswerteeinheit 44 ausgelesen, aufbereitet (gegebenenfalls unter Einbeziehung von Korrekturfunktionen) und als ein Intensitätsprofil I($\vartheta$) an einen Rechner 45 ausgegeben. Man beachte, dass die Detektorsteuerung 43 und die Auswerteeinrichtung 44 in einem Kombinationsgerät ausgebildet sein können.

## II. Beispiel für die mathematische Beschreibung der Geometrie eines erfindungsgemäßen Diffraktometers

Im folgenden sollen Röntgen-Messverfahren, wie sie mit einem erfindungsgemäßen Diffraktometer betrieben werden können, vorgestellt werden.

Um eine Gesamt-Röntgenmessung, umfassend eine Vielzahl von Einzelmessungen bei unterschiedlichen $\vartheta$-Positionen ausführen zu können, müssen verschiedene $\vartheta$-Positionen definiert aufgesucht werden können. Mit dem motorischen Antrieb wird in der Regel die x-Position der Probenposition relativ zur Führung kontrolliert, wobei die Führung in der Regel ortsfest ausgebildet ist und die Probenposition verfahren wird (so insbesondere in Fig. 2). Aus der x-Position kann dann in Kenntnis des mechanischen Aufbaus des erfindungsgemäßen Diffraktometers eine $\vartheta$-Position ($\vartheta$: Einfalls- und Ausfallswinkel der Röntgenstrahlung an der Probe auf der Probenposition) abgeleitet werden. Dies soll für die Geometrie eines Diffraktometers entsprechend Fig. 2 ("Y-Goniometer") hier explizit erfolgen. Aus der geometrischen Beziehung $\vartheta(x)$ kann dann auch die Ableitung d $\vartheta(x)$ / dx bestimmt werden, die in vielen Fällen für die Auswertung von Detektor-Messergebnissen benötigt wird (siehe unter IV.)

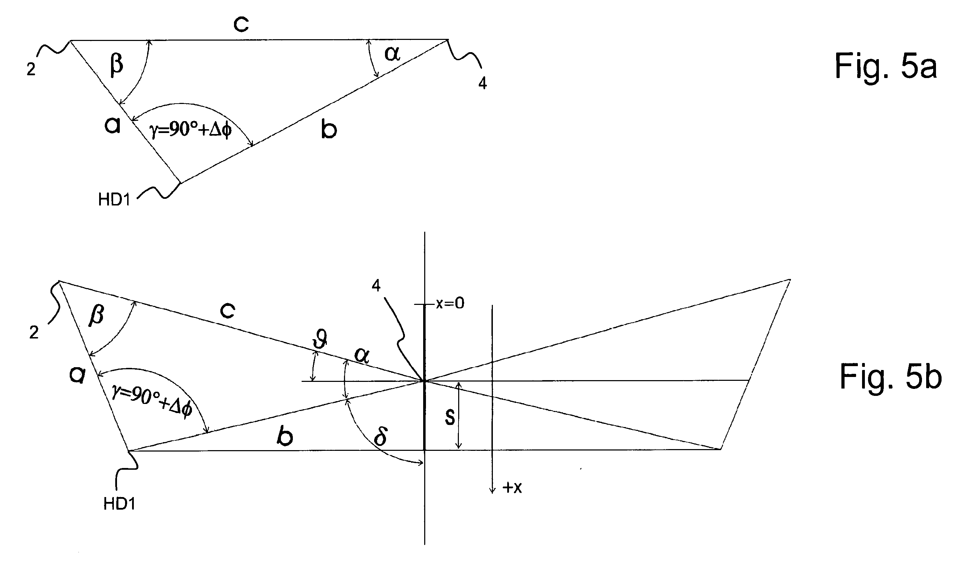

Der abbildungstechnische Ort der Quelle 2, der erste Hilfsdrehpunkt HD1, und die Probenposition 4 bilden ein allgemeines Dreieck mit den Seitenlängen a, b, c, und den Innenwinkeln $\alpha$, $\beta$, und $\gamma$, vgl. **Fig. 5a** und **Fig. 5b**. In Fig. 5b werden auch die Hilfskoordinate s und der Hilfswinkel $\delta$ definiert.

Es wird angenommen, dass der Winkel am ersten Hilfsdrehpunkt HD1 eine kleine Abweichung $\Delta\phi$ von einem 90°-Winkel aufweist.

Die Probenposition 4 kann in x-Richtung (vertikal) verfahren werden. Als Nullpunkt für die x-Position wird ein horizontales Bestrahlen ($\vartheta=0$) der Probenposition 4 durch die Quelle 2 angenommen (Fig. 5a). Der Zusammenhang zwischen x und $\vartheta$ kann nun wie folgt bestimmt werden:

1)

a)

$$s = (b\sin\alpha - x)$$

b)

$$s = b\cos\delta$$

c)

$$b\sin\alpha - x = b\cos\delta$$

d)

$$\delta = \arccos\left(\frac{b\sin\alpha - x}{b}\right)$$

2)

a)

$$\vartheta = \delta + \alpha - 90°$$

b)

$$\vartheta(x) = \arccos\left(\frac{b\sin\alpha - x}{b}\right) + \alpha - 90°$$

3) gegeben sein nun ein "nicht ideales Dreieck" mit

a)

$$a \neq b$$

b)

$$\gamma \neq 90° \rightarrow \gamma = 90° + \Delta\phi$$

c) Dreiecksgleichung:

$$c^2 = a^2 + b^2 - 2ab\cos(90° + \Delta\phi) =$$

$$= a^2 + b^2 - 2ab(\cos 90°\cos\Delta\phi - \sin 90°\sin\Delta\phi)$$

$$\cos 90° = 0$$

$$\sin 90° = 1$$

$$\sin\Delta\phi \approx \Delta\phi \quad \text{für kleine } \Delta\phi$$

$$\rightarrow c^2 \approx a^2 + b^2 + 2ab\Delta\phi$$

d) Dreiecksgleichung:
e)

$$a^2 = b^2 + c^2 - 2bc\cos\alpha \rightarrow c^2 = a^2 - b^2 + 2bc\cos\alpha$$

$$\rightarrow c^2 = a^2 - b^2 + 2bc\cos\alpha \approx a^2 + b^2 + 2ab\Delta\phi$$

$$\rightarrow b + 2a\Delta\phi = -b + 2c\cos\alpha$$

$$\cos\alpha = \frac{b + a\Delta\phi}{c} \rightarrow \alpha = \arccos\left(\frac{b + a\Delta\phi}{c}\right)$$

4)

$$\alpha = \arccos\left(\frac{b + a\Delta\phi}{\sqrt{a^2 + b^2 + 2ab\Delta\phi}}\right)$$

5a)

$$\vartheta(x) = \arccos\left(\frac{b\sin\left(\arccos\left(\frac{b + a\Delta\phi}{\sqrt{a^2 + b^2 + 2ab\Delta\phi}}\right)\right) - x}{b}\right) + \arccos\left(\frac{b + a\Delta\phi}{\sqrt{a^2 + b^2 + 2ab\Delta\phi}}\right) - 90°$$

5b) Diese Formel 5a) lässt sich leicht nach x auflösen, um x(ϑ) zu erhalten. Besagte Formel x(ϑ) lässt sich nach den üblichen Regeln der Mathematik differenzieren, um dx/dϑ zu erhalten.

6) Sonderfall (gleichschenkliges Dreieck mit y=90°) Δϕ=0; a=b:

$$\vartheta(x) = \arccos\left(\frac{b\sin\left(\arccos\left(\frac{b}{\sqrt{a^2 + b^2}}\right)\right) - x}{b}\right) + \arccos\left(\frac{b}{\sqrt{a^2 + b^2}}\right) - 90°$$

$$\vartheta(x) = \arccos\left(\frac{b\sin\left(\arccos\left(\frac{1}{\sqrt{2}}\right)\right) - x}{b}\right) + \arccos\left(\frac{1}{\sqrt{2}}\right) - 90°$$

$$\vartheta(x) = \arccos\left(\frac{b\sin(45°) - x}{b}\right) + 45° - 90°$$

$$\vartheta(x) = \arccos\left(\frac{\sqrt{\dfrac{b^2}{2}} - x}{b}\right) - 45° = \arccos\left(\frac{\sqrt{\dfrac{b^2}{2}} - x}{b}\right) - \frac{\pi}{4}$$

7) Ableitung von $\vartheta(x)$ (Formel 6 für a=b und $\Delta\phi=0$) nach x:

$$\frac{\partial\vartheta(x)}{\partial x} = \frac{1}{b\sqrt{1 - \dfrac{\left(\sqrt{\dfrac{b^2}{2}} - x\right)^2}{b^2}}}$$

*III. Messwerterfassung mit herkömmlichen Röntgenbeugungs-Diffraktometem (Goniometern)*

**Messungen im Step-Scan-Modus (SSM):**

Bei "Intensitätsmessungen" mit Röntgendiffraktometern ist die Integralintensität I(h) proportional zum Betragsquadrat des Strukturfaktors F(h) (h: reziproker Gittervektor). Dabei misst man ein $I(\vartheta)$-Diagramm in $[\vartheta_i=\vartheta_{min}...\vartheta_{max}]$ mit n äquidistanten $\Delta\vartheta$-Schritten und konstanter Messzeit $\Delta t$:

$$(1a) \quad I(\underline{h}) = \int_{\vartheta_{min}}^{\vartheta_{max}} I(\vartheta)d\vartheta \propto |F(\underline{h})|^2 \qquad (1b) \quad I(\underline{h}) \approx \Delta\vartheta\sum_i I(\vartheta_i)$$

**Messungen im Continuous-Scan-Modus (CSM):**

Im diesem zeitsparenden Modus wird mit Winkelgeschwindigkeiten $d\vartheta/dt$=const. gefahren und gleichzeitig gemessen. Dabei werden während des Fahrens über kleine Bereiche $\Delta\vartheta$=const. (s.o.) Zählimpulse in $\Delta t$ "aufgesammelt" und der Mitte von $\Delta\vartheta$ zugeordnet. Das Resultat ist ein $I(\vartheta)$-Diagramm. Da hier die Winkelgeschwindigkeit ins Spiel kommt, kann man den Messbereich statt in $\Delta\vartheta$, in Zeitintervalle $\Delta t$ einteilen. Bei $d\vartheta/dt$=const. sind beide Betrachtungsweisen gleichwertig ($\Delta\vartheta$ und $\Delta t$ bleiben während des Messens konstant).

$$(2) \quad I(\underline{h}) = \int_{\vartheta_{min}}^{\vartheta_{max}} I(\vartheta)d\vartheta = \int_{t(\vartheta_{min})}^{t(\vartheta_{max})} I(\vartheta(t))\frac{d\vartheta}{dt}dt = \frac{d\vartheta}{dt}\int_{t(\vartheta_{min})}^{t(\vartheta_{max})} I(t)dt \propto \int_{t(\vartheta_{min})}^{t(\vartheta_{max})} I(t)dt \approx \Delta t\sum_i I(t_i)$$

*IV. Messwerterfassung mit erfindungsgemäßen Röntgenbeugungs-Diffrakfometern*

**Geometrie des Y-Goniometers:**

Aus geometrischen Überlegungen findet man für das erfindungsgemäße Y-Goniometer (Annahme: gleichschenklige Geometrie mit Schenkellänge b und 90°-Winkel, vgl. unter II.) die Formeln (3), (4), (5) und (6). Für die Koordinate der Linearbewegung gilt für $x=0 \rightarrow \vartheta(x=0)=0$. Formeln für nicht gleichschenklige Geometrie und Winkel $\neq$

90° sind deutlich umfangreicher (vgl. unter II.).

$$(3) \quad \vartheta(x) = \arccos\left(\frac{1}{\sqrt{2}} - \frac{x}{b}\right) - \frac{\pi}{4}$$

$$(4) \quad \frac{\partial \vartheta(x)}{\partial x} = \left(b\sqrt{1 - \left(\frac{1}{\sqrt{2}} - \frac{x}{b}\right)^2}\right)^{-1}$$

$$(5) \quad x(\vartheta) = \sqrt{\frac{b^2}{2} - b\cos\left(\vartheta + \frac{\pi}{4}\right)}$$

$$(6) \quad \frac{dx(\vartheta)}{d\vartheta} = b\sin\left(\vartheta + \frac{\pi}{4}\right)$$

**Messungen mit 0d-Detektor**

1) SSM-Modus: $\Delta x$ derart, dass $\Delta\vartheta$=const. und $\Delta t$=const. Aus (6) berechnet man die Strecke $\Delta x$ nach (7), um welche der Motor bewegt werden muss, um $\Delta\vartheta$ konstant zu halten und misst dann $\Delta t$. Die Auswertung des resultierenden $I(\vartheta)$-Diagramms erfolgt nach (1 b).

$$(7) \quad \Delta x(\vartheta) = \frac{dx(\vartheta)}{d\vartheta}\Delta\vartheta = \frac{dx(\vartheta)}{d\vartheta}\cdot const$$

2) SSM-Modus: $\Delta x$=const. und $\Delta t$=const. Detektor und Röntgenquelle bewegen sich mit $\Delta\vartheta\neq$const., sodass keine $d\vartheta$-Integration vorgenommen werden kann. Man erhält ein $I(x)$-Diagramm mit $\Delta x$=const. Über $\Delta\vartheta$=$d\vartheta$/dx$\cdot\Delta x$ kann man $I(x)$ über x integrieren, um $I(\underline{h})$ zu erhalten. Dabei wird jeder Messwert $I(\vartheta$-$(x_i))$=$I(x_i)$ mit dem "Korrekturfaktor" $d\vartheta$/dx an der Stelle $x_i$ (=$d\vartheta$/dx$|_{xi}$) multipliziert und dann über x integriert bzw. summiert.

$$(8) \quad \int_{\vartheta_{min}}^{\vartheta_{max}} I(\vartheta)d\vartheta = \int_{x(\vartheta_{min})}^{x(\vartheta_{max})} I(\vartheta(x))\frac{d\vartheta}{dx}dx \approx \Delta x\sum_i I(x_i)\frac{d\vartheta(x)}{dx}\Big|_{x_i}$$

3) CSM-Modus mit dx/dt-Anpassung: Wenn es die Steuerelektronik zulässt, kann man die Motorgeschwindigkeit dx/dt während des Fahrens so variieren, dass $d\vartheta$/dt=const. Man kann jetzt bei Position $\vartheta_i$=$\vartheta_{start}$+i$\cdot\Delta\vartheta_V$ (i=0...n) jeweils in kleinen Schritten $\Delta\vartheta_V$ die Geschwindigkeit dx/dt$|_{\vartheta i}$ über (9) immer wieder neu berechnen und die Motorgeschwindigkeit neu einstellen. Da $d\vartheta$/dt=const. bleibt, kann man dann genauso weiter verfahren wie unter (2) beschrieben, denn man erhält ein normales $I(\vartheta)$-Diagramm.

$$(9) \quad \frac{dx}{dt} = \frac{dx}{d\vartheta}\frac{d\vartheta}{dt} = \frac{dx}{d\vartheta}\dot{\vartheta}$$

4) CSM-Modus ohne dx/dt-Anpassung: Falls die Steuerelektronik nur dx/dt=const. erlaubt, ist d$\vartheta$/dt≠const. und Zählratenkorrekturen werden notwendig, da der Detektor bei konstanten Messzeiten $\Delta$t über nicht konstante Winkelintervalle $\Delta\vartheta$ fährt. Praktisch multipliziert man jeden im Zeitintervall [$t_i$ ,$t_i$+$\Delta$t] und an der Position ($x_i$,$\vartheta_i$) gemessenen I-Wert mit d$\vartheta$/dx|$_{xi}$ und summiert dann über alle Werte.

(10)

$$\int_{\vartheta_{min}}^{\vartheta_{max}} I(\vartheta)d\vartheta = \int_{t(\vartheta_{min})}^{t(\vartheta_{max})} I(\vartheta(t))\frac{d\vartheta}{dt}dt = \int_{t(\vartheta_{min})}^{t(\vartheta_{max})} I(t)\frac{d\vartheta}{dx}\frac{dx}{dt}dt = \int_{t(\vartheta_{min})}^{t(\vartheta_{max})} I(t)\frac{d\vartheta}{dx}\dot{x}dt \approx \Delta t\,\dot{x}\sum_i I(t_i)\frac{d\vartheta}{dx}\Big|_i$$

**Messungen mit 1d-Detektor mit m linear und äquidistant angeordneten Messelementen (Detektorelementen)**

1) CSM-Modus mit dx/dt-Anpassung: Vorgehensweise wie oben (9). Das ist die einfachste Lösung, sofern dx/dt während der Fahrzeit geändert werden kann.

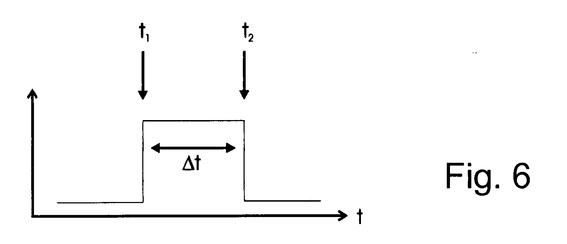

2) CSM-Modus ohne dx/dt-Anpassung: In diesem Fall ist dx/dt=const. und damit d$\vartheta$/dt≠const. Der Detektor muss zu jeder Zeit richtig getriggert (vgl. **Fig. 6:** Anstoßen von Messzeit-Start bei Flanke $t_1$ und Auslesen nach Messzeit $\Delta$t bei $t_2$) werden. Der erfasste Winkelbereich der Detektorelemente $p_i$ ist $\Delta\vartheta_p$, der des gesamten Detektors [$\vartheta_{start}$, $\vartheta_{start}$+(m-1)$\Delta\vartheta_p$]. Jedem $p_i$ kann zur Zeit $t_k$ ein Wert $\vartheta_j$ zugeordnet werden. Fährt der Detektor um +$\Delta\vartheta_p$, dann muss der Messwert von $p_{i-1}$ dem Wert $\vartheta_j$ des vorhergehenden $p_i$ zugeordnet (aufaddiert) werden. Dies geschieht über einen Speicher, dessen Register $R_j$ den Winkelwerten $\vartheta_j$ zugeordnet sind. Während des Fahrens werden die Messwerte der Elemente $p_i$ den Registerinhalten aufaddiert. Diese Zuordnungen müssen über den gesamten Messbereich zu allen Zeiten für alle m Elemente korrekt durchgeführt werden, andernfalls erhält man ein unbrauchbares I($\vartheta$)-Diagramm mit verschobenen und deutlich "verschmierten" Reflexen. Der Detektor benötigt bei dx/dt=const. zum Überfahren von $\Delta\vartheta_p$ unterschiedliche $\Delta t_i$, abhängig vom aktuellen Wert $\vartheta_{start}$. Bei konstanter Geschwindigkeit dx/dt gilt (11). Der während der Messzeit $\Delta t_i$ überfahrene Bereich $\Delta\vartheta$ soll konstant $\Delta\vartheta_p$ sein und berechnet sich an einer betrachteten Position ($\vartheta_i$,$x_i$) nach (12).

$$(11) \quad \frac{dx}{dt} = const. = \dot{x} = \frac{dx}{d\vartheta}\frac{d\vartheta}{dt} \quad \rightarrow \quad \frac{d\vartheta}{dt} = \dot{x}\Big/\frac{dx(\vartheta)}{d\vartheta} \quad \text{oder} \quad \frac{d\vartheta}{dt} = \frac{d\vartheta}{dx}\frac{dx}{dt} = \frac{d\vartheta}{dx}\dot{x}$$

$$(12) \quad \Delta\vartheta_p = \frac{d\vartheta}{dt}\Big|_{\vartheta_i(x_i)}\Delta t_i = \frac{d\vartheta}{dx}\Big|_{x_i}\frac{dx}{dt}\Delta t_i = \frac{d\vartheta}{dx}\Big|_{x_i}\dot{x}\Delta t_i \quad \rightarrow \quad \Delta t_i = \left(\frac{d\vartheta}{dx}\Big|_{x_i}\dot{x}\right)^{-1}\Delta\vartheta_p$$

Praktische Realisierung: Die Elektronik kontrolliert $x_i$ des Linearantriebs und damit $\vartheta_i$ des Detektors. An einer betrachteten Position ($\vartheta_i$,$x_i$) wird d$\vartheta$/dx berechnet und über (12) die notwendige Messzeit $\Delta t_i$ für den Detektor. Mit $\Delta t_i$ überstreicht der Detektor bei der i-ten Messung gleiches $\Delta\vartheta_p$ und Elemente $p_i$ können eindeutig den Winkelwerten zugeordnet werden. Man erhält ein Diagramm $I_t(\vartheta)$, bei dem sowohl die "Verschiebung" der Reflexe als auch deren "Verschmierung" verhindert wurde. Die Gesamtkorrektur geht über das bis hier beschriebene zeitgerechte Starten und Messen des Detektors hinaus, denn die $\Delta t_i$ sind verschieden, daher ist eine Zählimpuls-Korrektur $\Phi(\vartheta_i)$ nötig. Zu hohe Zählimpuls-Werte $I_t(\vartheta_i)$ müssen dann durch den größeren Wert von $dx/d\vartheta$ dividiert werden. Dabei muss man beachten, dass jedes der m Detektorelemente zum gleichen Wert $\vartheta_i$ bei unterschiedlichen Positionen $\vartheta_{start}$ und Geschwindigkeiten beiträgt. Die Zählimpuls-Korrektur $\Phi(\vartheta)$ ist daher eine Faltung aus der Detektorfensterfunktion $w(\vartheta)$ (Breite $\Theta = m\Delta\vartheta p$) und $dx(\vartheta)/d\vartheta$ mit $w(\vartheta)=0$ für $\vartheta<-\Theta/2$, $w(\vartheta)=1$ für $-\Theta/2\leq\vartheta\leq\Theta/2$ und $w(\vartheta)=0$ für $\vartheta>\Theta/2$.

$$(13) \quad \Phi(\vartheta') = \frac{dx(\vartheta)}{d\vartheta} * w(\vartheta) = \int_{-\infty}^{+\infty} \frac{dx(\vartheta)}{d\vartheta} w(\vartheta' - \vartheta) d\vartheta = \int_{\vartheta=\vartheta'-\frac{\Theta}{2}}^{\vartheta=\vartheta'+\frac{\Theta}{2}} \frac{dx(\vartheta)}{d\vartheta} d\vartheta$$

$$(14) \quad \Phi(\vartheta) = b\left( \cos\left( \vartheta - \frac{w}{2} + \frac{\pi}{4} \right) - \cos\left( \vartheta + \frac{w}{2} + \frac{\pi}{4} \right) \right)$$

Nachdem alle m Detektorelemente während des Scans an der Position $\vartheta_i$ vorbeigefahren sind und deren Zählimpulse im Speicher $R_i$ aufaddiert wurden ist dieser Wert $I_t(\vartheta_i)$ mit $\Phi(\vartheta_i)$ nach (15) zu korrigieren.

$$(15) \quad I(\vartheta_i) = \frac{I_t(\vartheta_i)}{\Phi(\vartheta_i)}$$

Zusammenfassend beschreibt die vorliegende Erfindung ein Röntgendiffraktometer mit einer zahnkranzlosen Mechanik, die dazu geeignet ist, die beiden Schenkel eines Goniometers, auf welchen jeweils Quelle und Detektor angeordnet sind, gleichzeitig und korreliert zu verfahren, wobei der 9-Winkel gescannt werden kann und gleichzeitig eine $\vartheta$-$\vartheta$-Geometrie (Bragg-Brentano-Messgeometrie) stets erhalten bleibt. Dies wird dadurch erreicht, dass die Goniometerschenkel (oder Gestänge) einen gemeinsamen Hauptdrehpunkt und weiterhin jeweils einen Hilfsdrehpunkt aufweisen. Die beiden Hilfsdrehpunkte sind bezüglich einer Symmetrieebene E, die den Hauptdrehpunkt enthält, symmetrisch angeordnet und auf einer bezüglich der Ebene E symmetrischen Führung beweglich. Der Hauptdrehpunkt ist nur in der Ebene E beweglich, etwa auf einer Schienenführung. Wird der Hauptdrehpunkt, an dem die zu vermessende Probe angeordnet ist, in der Ebene E verfahren, so bewirken die Führung und die Goniometerschenkel eine gegengleiche Winkelverschwenkung der Goniometerschenkel, so dass bezüglich Quelle und Detektor die $\vartheta$-$\vartheta$-Geometrie gewahrt bleibt. Das Verfahren des Hauptdrehpunkts relativ zur Führung kann mittels eines einzigen Motors leicht angesteuert werden.

**Patentansprüche**

1. Diffraktometer (1; 24; 30),
   mit einer Quelle (2) zur Erzeugung von Röntgenstrahlung,
   mit einer Probenposition (4) zur Anordnung einer Probe,
   und mit einem Detektor (3; 31) zur Registrierung von von der Probe ausgehender Röntgenstrahlung,
   wobei die Quelle (2) und der Detektor (3; 31) bezüglich einer Achse A, die durch die Probenposition (4) verläuft, rotierbar sind,
   und wobei die Quelle (2), die Probenposition (4) und der Detektor (3; 31) in einer gemeinsamen Ebene M, die senkrecht zur Achse A liegt, angeordnet sind,
   **dadurch gekennzeichnet,**

- **dass** ein erstes Gestänge (5; 25) vorgesehen ist, welches um die Achse A drehbar gelagert ist, und an welchem die Quelle (2) befestigt ist,
- **dass** ein zweites Gestänge (6; 26) vorgesehen ist, welches ebenfalls um die Achse A drehbar gelagert ist, und an welchem der Detektor (3; 31) befestigt ist,
- **dass** das erste Gestänge (5; 25) weiterhin an einem ersten Hilfsdrehpunkt HD1 drehbar um eine erste Hilfsachse HA1 gelagert ist, wobei die erste Hilfsachse HA1 parallel zur Achse A verläuft und zu dieser einen festen Abstand AB hat,
- **dass** das zweite Gestänge (6; 26) an einem zweiten Hilfsdrehpunkt HD2 drehbar um eine zweite Hilfsachse HA2 gelagert ist, wobei die zweite Hilfsachse HA2 ebenfalls parallel zur Achse A verläuft und zu dieser ebenfalls den festen Abstand AB hat,
- **dass** eine Führung (13; 13a, 13b) vorgesehen ist, entlang welcher einer oder beide der Hilfsdrehpunkte HD1, HD2 verfahrbar sind, wobei die Führung (13; 13a, 13b) spiegelsymmetrisch bezüglich einer Ebene E verläuft, die die Achse A enthält und die von den beiden Hilfsdrehpunkten HD1, HD2 gleich weit entfernt ist,
- wobei die Probenposition (4) relativ zur Führung (13; 13a, 13b) in einer x-Richtung verfahrbar ist, wobei die x-Richtung in der Ebene E und senkrecht zur Achse A verläuft.

2. Diffraktometer (1; 24; 30) nach Anspruch 1, **dadurch gekennzeichnet, dass** der Abstand QP zwischen Quelle (2) und Probenposition (4) gleich ist dem Abstand PD zwischen Probenposition (4) und Detektor (3; 31).

3. Diffraktometer (1; 24; 30) nach einem der vorhergehenden Ansprüche, **dadurch gekennzeichnet, dass** die Führung (13; 13a, 13b) gerade verläuft.

4. Diffraktometer (1; 24; 30) nach einem der vorhergehenden Ansprüche, **dadurch gekennzeichnet, dass** beide Hilfsdrehpunkte HD1, HD2 auf der Führung (13; 13a, 13b) gegenläufig verfahrbar sind.

5. Diffraktometer (1; 24; 30) nach einem der vorhergehenden Ansprüche, **dadurch gekennzeichnet, dass** die Gestänge (5, 6; 25, 26) jeweils so ausgebildet sind, dass Probenposition (4), zugehöriger Hilfsdrehpunkt HD1, HD2 und Quelle (2) bzw. Detektor (3; 31) jeweils ein Dreieck, insbesondere ein gleichschenkliges Dreieck, in der Ebene M ausbilden.

6. Diffraktometer (1; 24; 30) nach einem der vorhergehenden Ansprüche, **dadurch gekennzeichnet, dass** ein motorischer Antrieb vorgesehen ist, mit dem die Probenposition (4) relativ zur Führung (13; 13a, 13b) verfahrbar ist.

7. Diffraktometer (1; 24; 30) nach Anspruch 6, **dadurch gekennzeichnet, dass** die Führung (13; 13a, 13b) ortsfest verläuft, und die Probenposition (4) mittels des motorischen Antriebs entlang einer ortsfesten Schiene (9; 9a, 9b) verfahrbar ist.

8. Diffraktometer (1; 24; 30) nach Anspruch 6 oder 7, **dadurch gekennzeichnet, dass** die Führung (13; 13a, 13b) eine Gewindestange (12) umfasst, welche mit dem motorischen Antrieb angetrieben ist.

9. Diffraktometer (1; 24; 30) nach einem der Ansprüche 6 bis 8, **dadurch gekennzeichnet, dass** eine Steuereinrichtung (42) für den motorischen Antrieb vorgesehen ist, welche einen Vorschub der Probenposition in x-Richtung gemäß einer vorgegebenen, zeitlichen Funktion x(t) erzeugt, insbesondere so dass der Detektor (3; 31) gleiche Winkelinkremente in gleichen Zeiten überstreicht.

10. Diffraktometer (1; 24; 30) nach einem der Ansprüche 6 bis 8, **dadurch gekennzeichnet,**
**dass** eine Steuereinrichtung (42) für den motorischen Antrieb vorgesehen ist, welche einen Vorschub der Probenposition (4) in x-Richtung gemäß einer vorgegebenen, zeitlichen Funktion x(t) erzeugt mit d/dt x(t)=const.,
und **dass** eine Auswerteeinrichtung (44) vorgesehen ist, welche einen nicht-linearen Zusammenhang $\vartheta$ (x) bei der Bestimmung eines Intensitätsprofils I($\vartheta$) von der Probe berücksichtigt.

11. Diffraktometer (1; 24; 30) nach Anspruch 10, **dadurch gekennzeichnet, dass** die Steuereinrichtung (44) eine in einem Zeitintervall $t_i$ bestimmte Intensität I($t_i$) durch Multiplikation mit einem Faktor $\left.\frac{d\vartheta}{dx}\right|_{xi}$ korrigiert, mit $i$: Index der integralen Einzelmessungen und $x_i$: mittlerer x-Wert bei Einzelmessung i.

**12.** Diffraktometer (1; 24; 30) nach einem der vorhergehenden Ansprüche, **dadurch gekennzeichnet, dass** der Detektor (3; 31) als 1-dimensionaler Detektor (31) mit einem länglichen Detektorfenster (31a) ausgebildet ist, wobei das Detektorfenster (31 a) über seine gesamte Länge in der Ebene M liegt.

**13.** Diffraktometer (1; 24; 30) nach einem der vorhergehenden Ansprüche, **dadurch gekennzeichnet, dass** das Diffraktometer (1; 24; 30) so ausgebildet ist, dass eine an der Probenposition (4) angeordnete Probe während einer Relativbewegung von Probenposition (4) und Führung (13; 13a, 13b) ihre Ausrichtung beibehält, insbesondere wobei die an der Probenposition (4) angeordnete Probe horizontal oder senkrecht ausgerichtet ist.

**Claims**

**1.** Diffractometer (1; 24; 30) comprising a source (2) for generating X-ray radiation, a sample position (4) for arranging a sample, and a detector (3; 31) for registration of X-ray radiation emitted by the sample, wherein the source (2) and the detector (3; 31) can be rotated with respect to an axis A that extends through the sample position (4), and wherein the source (2), the sample position (4) and the detector (3; 31) are disposed in a common plane M that is perpendicular to the axis A, **characterized in that**

- a first linkage (5; 25) is provided, which is rotatably disposed about the axis A and to which the source (2) is mounted,
- a second linkage (6; 26) is provided, which is also rotatably disposed about the axis A and to which the detector (3; 31) is mounted,
- the first linkage (5; 25) is furthermore disposed on a first auxiliary center of rotation HD1 such that it can be rotated about a first auxiliary axis HA1, wherein the first auxiliary axis HA1 extends parallel to the axis A and has a fixed separation AB therefrom;
- the second linkage (6; 26) is disposed on a second auxiliary center of rotation HD2 such that it can be rotated about a second auxiliary axis HA2, wherein the second auxiliary axis HA2 also extends parallel to the axis A and also has the fixed separation AB therefrom;
- a guidance (13; 13a, 13b) is provided, along which one or both auxiliary centers of rotation HD1, HD2 can be moved, wherein the guidance (13; 13a, 13b) extends mirror-symmetrically with respect to a plane E that contains the axis A and that has the same separation from each auxiliary center of rotation HD1 and HD2;
- wherein the sample position (4) can be moved relative to the guidance (13; 13a, 13b) in an x-direction, wherein the x-direction extends in the plane E and perpendicularly to the axis A.

**2.** Diffractometer (1; 24; 30) according to claim 1, **characterized in that** the separation QP between the source (2) and the sample position (4) is equal to the separation PD between the sample position (4) and the detector (3; 31).

**3.** Diffractometer (1; 24; 30) according to any one of the preceding claims, **characterized in that** the guidance (13; 13a, 13b) extends in a straight line.

**4.** Diffractometer (1; 24; 30) according to any one of the preceding claims, **characterized in that** both auxiliary centers of rotation HD1, HD2 can be moved in opposite directions on the guidance (13; 13a, 13b).

**5.** Diffractometer (1; 24; 30) according to any one of the preceding claims, **characterized in that** the linkages (5, 6; 25, 26) are designed in such a fashion that the sample position (4), the associated auxiliary center of rotation HD1, HD2, and the source (2) or the detector (3; 31) each form a triangle in the plane M, in particular an equilateral triangle.

**6.** Diffractometer (1; 24; 30) according to any one of the preceding claims, **characterized in that** a motor drive is provided for moving the sample position (4) relative to the guidance (13; 13a, 13b).

**7.** Diffractometer (1; 24; 30) according to claim 6, **characterized in that** the guidance (13; 13a, 13b) is stationary and the sample position (4) can be moved along a stationary rail (9; 9a, 9b) by means of the motor drive.

**8.** Diffractometer (1; 24; 30) according to claim 6 or 7, **characterized in that** the guidance (13; 13a, 13b) comprises a threaded rod (12) that is driven by the motor drive.

**9.** Diffractometer (1; 24; 30) according to any one of the claims 6 through 8, **characterized in that** a control means (42) is provided for the motor drive, which advances the sample position in the x-direction in accordance with a predetermined time function x(t), in particular, such that the detector (3; 31) sweeps the same angular increments within the same time.

10. Diffractometer (1; 24; 30) according to any one of the claims 6 through 8, **characterized in that** a control means (42) is provided for the motor drive, which advances the sample position (4) in the x-direction in accordance with a predetermined time function x(t) with d/dt x(t)=const., and an evaluation means (44) is provided, which takes into consideration a non-linear dependence $\vartheta$ (x) for determining an intensity profile I($\vartheta$) of the sample.

11. Diffractometer (1; 24; 30) according to claim 10, **characterized in that** the control means (44) corrects an intensity

I($t_i$) determined in a time interval $t_i$ through multiplication by a factor of $\left.\dfrac{d\vartheta}{dx}\right|_{xi}$ ,

with $_i$: index of the integral individual measurements and $x_i$: average x-value for an individual measurement i.

12. Diffractometer (1; 24; 30) according to any one of the preceding claims, **characterized in that** the detector (3; 31) is designed as a one-dimensional detector (31) with an elongated detector window (31 a), wherein the detector window (31 a) lies in the plane M over its entire length.

13. Diffractometer (1; 24; 30) according to any one of the preceding claims, **characterized in that** the diffractometer (1; 24; 30) is designed in such a fashion that a sample disposed at the sample position (4) maintains its orientation during a relative motion of the sample position (4) and the guidance (13; 13a, 13b), in particular, wherein the sample disposed at the sample position (4) is oriented in a horizontal or vertical direction.

**Revendications**

1. Diffractomètre (1 ; 24 ; 30),
   avec une source (2) pour produire un rayonnement X,
   avec une position d'échantillon (4) pour disposer un échantillon,
   et avec un détecteur (3 ; 31) pour enregistrer le rayonnement X provenant de l'échantillon,
   la source (2) et le détecteur (3 ; 31) étant rotatifs par rapport à un axe A qui passe par la position d'échantillon (4),
   et la source (2), la position d'échantillon (4) et le détecteur (3 ; 31) étant disposés dans un plan commun M qui est perpendiculaire à l'axe A,
   **caractérisé en ce**

   - **qu'**il est prévu une première tige (5 ; 25) qui est montée tournante autour de l'axe A et à laquelle la source (2) est fixée,
   - **qu'**il est prévu une deuxième tige (6 ; 26) qui est également montée tournante autour de l'axe A et à laquelle le détecteur (3 ; 31) est fixé,
   - **que** la première tige (5 ; 25) est en outre montée tournante à un premier point d'appui auxiliaire HD1 autour d'un premier axe auxiliaire HA1, le premier axe auxiliaire HA1 étant parallèle à l'axe A et situé à une distance fixe AB de celui-ci,
   - **que** la deuxième tige (6 ; 26) est montée tournante à un deuxième point d'appui auxiliaire HD2 autour d'un deuxième axe auxiliaire HA2, le deuxième axe auxiliaire HA2 étant également parallèle à l'axe A et également situé à la distance fixe AB de celui-ci,
   - **qu'**il est prévu un guide (13 ; 13a, 13b) le long duquel un ou les deux points d'appui auxiliaires HD1, HD2 sont déplaçables, le guide (13 ; 13a, 13b) s'étendant symétriquement par rapport à un plan E qui contient l'axe A et qui est situé à égale distance des deux points d'appui auxiliaires HD1, HD2,
   - la position d'échantillon (4) étant déplaçable par rapport au guide (13 ; 13a, 13b) dans une direction x, la direction x s'étendant dans le plan E et perpendiculairement à l'axe A.

2. Diffractomètre (1 ; 24 ; 30) selon la revendication 1, **caractérisé en ce que** la distance QP entre source (2) et position d'échantillon (4) est égale à la distance PD entre position d'échantillon (4) et détecteur (3 ; 31).

3. Diffractomètre (1 ; 24 ; 30) selon une des revendications précédentes, **caractérisé en ce que** le guide (13 ; 13a, 13b) est rectiligne.

**4.** Diffractomètre (1 ; 24 ; 30) selon une des revendications précédentes, **caractérisé en ce que** les deux points d'appui auxiliaires HD1, HD2 sont déplaçables en sens contraires sur le guide (13 ; 13a, 13b).

**5.** Diffractomètre (1 ; 24 ; 30) selon une des revendications précédentes, **caractérisé en ce que** les tiges (5, 6 ; 25, 26) sont conçues chacune de façon que position d'échantillon (4), point d'appui auxiliaire HD1, HD2 associé et source (2) ou détecteur (3 ; 31) forment chaque fois un triangle, en particulier un triangle isocèle, dans le plan M.

**6.** Diffractomètre (1 ; 24 ; 30) selon une des revendications précédentes, **caractérisé en ce qu'**il est prévu un entraînement par moteur avec lequel la position d'échantillon (4) est déplaçable par rapport au guide (13 ; 13a, 13b).

**7.** Diffractomètre (1 ; 24 ; 30) selon la revendication 6, **caractérisé en ce que** le guide (13 ; 13a, 13b) est fixe et la position d'échantillon (4) déplaçable le long d'un rail fixe (9 ; 9a, 9b) au moyen de l'entraînement par moteur.

**8.** Diffractomètre (1 ; 24 ; 30) selon la revendication 6 ou 7, **caractérisé en ce que** le guide (13 ; 13a, 13b) comprend une tige filetée (12) qui est entraînée par l'entraînement par moteur.

**9.** Diffractomètre (1 ; 24 ; 30) selon une des revendications 6 à 8, **caractérisé en ce qu'**il est prévu un dispositif de commande (42) pour l'entraînement par moteur, lequel produit une avance de la position d'échantillon en direction x selon une fonction du temps x(t) prédéfinie, en particulier de façon que le détecteur (3 ; 31) balaye les mêmes incréments d'angle en des temps égaux.

**10.** Diffractomètre (1 ; 24 ; 30) selon une des revendications 6 à 8, **caractérisé en ce qu'**il est prévu un dispositif de commande (42) pour l'entraînement par moteur, lequel produit une avance de la position d'échantillon (4) en direction x selon une fonction du temps x(t) prédéfinie avec d/dt x(t) = const.,
et qu'il est prévu un dispositif d'évaluation (44) qui tient compte d'une relation non linéaire $\vartheta$ (x) lors de la détermination d'un profil d'intensité I($\vartheta$) de l'échantillon.

**11.** Diffractomètre (1 ; 24 ; 30) selon la revendication 10, **caractérisé en ce que** le dispositif de commande (44) corrige une intensité I($t_i$) déterminée dans un intervalle de temps $t_i$ par multiplication avec un facteur $\left.\dfrac{d\vartheta}{dx}\right|_{xi}$ ,

avec i : indice des mesures individuelles intégrées et $x_i$ : valeur x moyenne lors de la mesure individuelle i.

**12.** Diffractomètre (1 ; 24 ; 30) selon une des revendications précédentes, **caractérisé en ce que** le détecteur (3 ; 31) est réalisé sous la forme d'un détecteur (31) unidimensionnel avec une fenêtre de détecteur allongée (31a),
la fenêtre de détecteur (31a) étant située sur toute sa longueur dans le plan M.

**13.** Diffractomètre (1 ; 24 ; 30) selon une des revendications précédentes, **caractérisé en ce que** le diffractomètre (1 ; 24 ; 30) est conçu de façon qu'un échantillon disposé à la position d'échantillon (4) conserve son orientation pendant un mouvement relatif de la position d'échantillon (4) et du guide (13 ; 13a, 13b),
l'échantillon disposé à la position d'échantillon (4) étant en particulier orienté horizontalement ou verticalement.

Fig. 1

Fig. 2

EP 2 112 505 B1

Fig. 3

Fig. 4

EP 2 112 505 B1

Fig. 5a

Fig. 5b

Fig. 6

**EP 2 112 505 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 6066741 B